# EUROPEAN PATENT APPLICATION

(11) **EP 2 299 656 A1**
(43) Date of publication of application: **23.03.2011**
(21) Application number: 09305877.4
(22) Date of filing: 21.09.2009
(51) Int. Cl.: H04L 29/08, H04L 29/06

(54) **A method, a system, a device, a computer program and a computer program product for connecting a network device in a communications network**

(71) Applicant: Alcatel Lucent, 75008 Paris (FR)
(72) Inventor: Roessler, Horst, 70794 Filderstadt (DE); Grob-Lipski, Heidrun, 72181 Starzach (DE)
(74) Representative: Brose, Gerhard

(57) **Abstract**

The invention concerns a method for connecting a first network device (102) in a communications network (100) wherein a connection, in particular connecting said first network device and a second network device (101), is assembled by said first network device from components, in particular upon receipt of an instruction.

## Description

### Field of the invention

The invention relates to a method, a system, a device, a computer program and a computer program product for connecting in a communications network.

### Background

In an implementation for connecting a network device in a communications network a server sends data to a client via a link. To establish a connection between the server and the client, a protocol stack, algorithms or connection resources are used. The protocol stack, the algorithms or resources depend on the hardware of the link as well as of the server and the client.

The same protocol stack, algorithms or resources may be used on different servers, clients or links. Also the same servers clients or links may support several different protocol stacks, algorithms or resources.

An example for such a protocol stack is the well known transmission control protocol (TCP) internet protocol (IP) stack.

However, the protocol stack, the algorithm or resource that is used for the connection depends on the application, e.g. the web service that uses the network service delivered from the protocol stack, algorithm or resource. The link, the server or the client and have to be defined at design time. Changes to the server, the client or the link may result in an inability to maintain or establish the connection.

### Summary

The object of the invention is thus to provide a connection that supports interoperability of different technologies, adaptive to the environment and to the application that uses the network service delivered from the protocols, algorithms and resources, for example to a device or a protocol used for establishing said connection.

The main idea of the invention is to connect a network device in a communications network, wherein a connection, in particular connecting said network device, is assembled from components upon receipt of an instruction. This means that said connection is automatically assembled using fitting hardware or software, e.g. protocols or parts of protocols.

Advantageously said instruction comprises information about said connection. This allows selecting the hardware or software that fits the needs of the connection best.

Advantageously said instruction comprises information about available components. Information about available components allows speeding up the selection process.

Advantageously information about suitable components is stored in a data base.

Advantageously suitable components, in particular protocols, algorithms or resources, are assembled, in particular to form a protocol stack, new algorithms and new resources, new network services, and stored in a data base.

Further developments of the invention can be gathered from dependent claims and the following description.

### Brief description of the figures

In the following the invention will be explained further making reference to the attached drawings.
Figure 1 schematically shows a first part of a communication network according to a first embodiment.

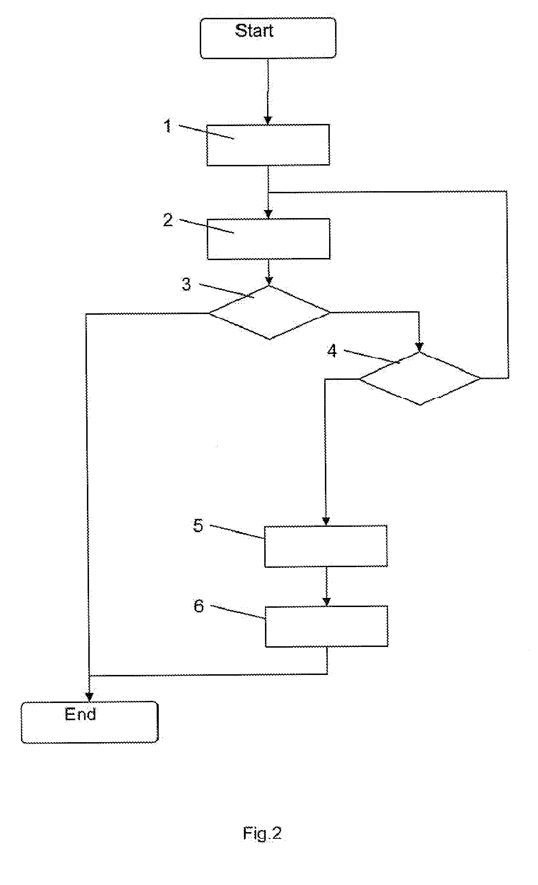

Figure 2 schematically shows a first flow chart, showing some typical steps in a second method.

### Description of the embodiments

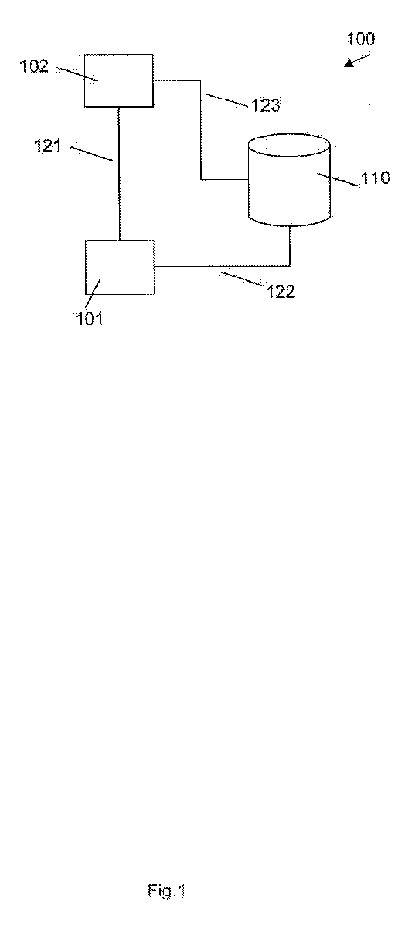

Figure 1 shows a first part of a communication network 100.

Said communication network 100 comprises a first network device, a second network device and a data base 110,

According to an embodiment said first network device is a server 101 and said second network device is a client 102.

According to said embodiment said server 101 and said client 102 are connected via a first link 121.

Furthermore said server 101 is connected to said data base 110 via a second link 122.

Additionally said client 102 is connected to said data base 110 via a third link 123.

Said links may be wireless or wired.

Said second link 122 and said third link 123 for example use the well known transmission control protocol (TCP)/ internet protocol (IP).

Said client 102 is adapted to request a service, e.g. display of a web page, from said server 101 via said first link 121.

Said server 101 is adapted to host said service, e.g. content of said web page, and make said service available to said client upon request by transmitting data, e.g. said content of said web page, to said client 102 via said first link 121.

Said client is adapted to request information about a provider of said service from said data base 110 via said third link 123.

Furthermore said client is adapted to request an instruction for assembling a first receiving part or a first sending part from said data base 110.

Said instruction may identify a connection type or a resource to use.

Said resource may be hardware or software. In case of hardware, said instruction may identify a processor, a network card or an antenna that is already installed on said client 102. In case of software said instruction may identify a part of a protocol, a protocol, a protocol stack or an algorithm to be used. Said part of said protocol, said protocol, said protocol stack or said algorithm may be already available on said client 103 or may be transferred to said client 102 with said instruction.

Said instruction for example is a message transferred using said transmission control protocol / internet protocol connection.

Said data base 110 is adapted to store said instruction and said information about said provider of said service. Said instruction and said provider of said service are associated in said data base 110.

Said information about said provider contains for example an address of said server 102 or information about a part of a protocol, a protocol or a protocol stack that may be used to communicate with said server 103.

Said data base 110 is adapted to send said information about said provider of said service to said client 102 upon receipt of a request for said information.

Said data base 110 is adapted to send said instruction to said client 102 upon receipt of a request for said instruction.

Said instruction may be derived from connection data stored in said data base 110, Said connection data for example contains information about said hardware and said software that is to be used for connecting to said server 101.

Said connection data may also contain parts of protocols, protocols or protocol stacks, algorithms or resource information as executable code that may be provided to said client 102.

Said connection data may be identified by an ontology describing the relationship between available hardware and software. In particular said ontology may describe which hardware and which software are suitable for establishing a connection between said client 102 and said server 101.

Suitable components are for example found using an automated reasoner that processes said ontology. Methods for automatically determine suitable components using ontology are well known to persons skilled in the art and not further explained here.

In an example of said embodiment said ontology contains a description about the wireless resources WiMax and LTE.

Goal of a first method according to said example is to connect a device using long term evolution network components (well known as LTE network components) and Worldwide Interoperability for Microwave Access network components (well known as WiMax network components).

According to said example said server 101 accesses said communications network 100 using Worldwide Interoperability for Microwave Access network components. Additionally said client 102 accesses said communications network 100 using long term evolution network components.

Said first method starts, whenever said client 102 requests information about said server 101 from said data base 110. Afterwards a step 1 is executed,

In said step 1 said data base 110 determines said provider of said service and returns said address of said server 101 to said client 102. Afterwards a first timer, e.g, a variable t is initialized, with zero. Then a step 2 is executed.

In said step 2 said data base 110 increments said timer t by one. Then a step 3 is executed.

In said step 3 a test is performed to determine if said timer exceeds a first threshold, e.g. t>10. In case said timer exceeds said threshold, a maximum wait time is exceeded and said first method ends. Otherwise step 4 is executed.

In said step 4 a test is performed to determine if said request for said instruction was received. In case said request for said instruction was received, a step 5 is executed. Otherwise said step 2 is executed.

In said step 5 said instruction is determined. For example said automated reasoner determines said suitable components using said ontology, According to said example, said request for said instruction contains additional information, about the hardware components available on said client 102. This additional information indicates that said client 102 is able to connect using, long term evolution network components. The automated reasoner determines the suitable components from this information and from additional information about said server 101. Said additional information about said server 101 is that said server 101 is able to connect using Worldwide Interoperability for Microwave Access network components.

According to said example said instruction to said client comprises a first protocol, e.g. executable code, able to connect said long term evolution network component to said Worldwide Interoperability for Microwave Access network component. Said first protocol may comprise two parts, a first part to translate from long term evolution protocol to a generic protocol and a second part to translate said generic protocol to a Worldwide Interoperability for Microwave Access protocol.

To make said first protocol reusable the resulting first protocol is stored in said data base 110 and a description is added to said ontology. Afterwards a step 6 is executed.

In said step 6 said instruction is sent to said client 102. Afterwards said first method ends.

According to a modification of said embodiment said server 101 transfers information about it's hardware or software to said data base 110 via said second link 122.

A second method according to said modification of said embodiment starts, whenever said data base 110 receives a message including information about said hardware or software of said server 101 for example as ontological description of said server 101. Afterwards a step 20 is executed.

In said step 20 said information about said hardware or software of said server ion is extracted from said message and stored on said data base 110. For example said ontological description is extracted and stored on said data base 110. Afterwards said second method ends.

Said ontological description is for example stored on said server 101 by an operator of said server 101 and sent by said server to said data base 110 upon activation of said server. Addressing and methods for sending said message are for example known from said transmission control protocol / internet protocol.

The description and drawings merely illustrate the principles of the invention. It will thus be appreciated that those skilled in the art will be able to device various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof,

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represcented in computer readable medium and so executed by a computer or processor, whether or not such computer or processor is explicitly shown.

A person of skill in the art would readily recognize, that steps of various above-deseribed methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for connecting a first network device in a communications network, **wherein** a connection, in particular connecting said first network device and a second network device, is assembled by said first network device from components, in particular upon receipt of an instruction.

2. The method according to claim 1, wherein said instruction comprises information about said connection.

3. The method according to claim 1, wherein said instruction comprises information about available components.

4. The method according to claim 1, wherein information about suitable components is stored in a data base.

5. The method according to claim 1, wherein suitable components, in particular protocols, algorithms or resources, are assembled, in particular to form a protocol stack, and stored in a data base.

6. A system for connecting a first network device in a communications network, **wherein** said first network device is adapted to assemble a receiving or a sending part of a connection, in particular connecting said first network device and a second network device, from components upon receipt of an instruction.

7. A network device, **adapted** to assemble a receiving or a sending part of a connection, in particular connecting said first network device and a second network device, from components upon receipt of an instruction.

8. A computer program for connecting a first network device in a communications network, **wherein** said computer program, when executed on a computer, causes the computer to assemble a connection, in particular connecting said first network device and a second network device, from components, in particular upon receipt of an instruction.

9. A computer program product for connecting a first network device in a communications network comprising a computer usable medium having a computer readable program, **wherein** said computer readable program, when executed on a computer, causes the computer to assemble a connection, in particular connecting said first network device and a second network device, from components" in particular upon receipt of an instruction.

## Amended claims

### Amended claims in accordance with Rule 137(2) EPC.

**1.** A method for connecting a first network device (101) and a second network device (102) in a communications network (100), wherein said first network device (101)
- receives an instruction comprising ontological information about available components, in particular protocols, algorithms or resources, suitable to connect said first network device (101) and said second network device (102),
- selects suitable components from said available components using an automated reasoner, and
- uses said suitable components to connect said first network device (101) and said second network device (102).

**2.** The method according to claim 1, wherein said instruction comprises information about said connection.

**3.** The method according to claim 1, wherein information about suitable components is stored in a data base.

**4.** The method according to claim 1, wherein suitable components, in particular protocols, algorithms or resources, are assembled, in particular to form a protocol stack, and stored in a data base.

**5.** A system for connecting a first network device (101) in a communications network (100), wherein said first network device (101) is adapted to receive an instruction comprising ontological information about available components, in particular protocols, algorithms or resources, suitable to connect said first network device (101) and said second network device (102), to select suitable components from said available components using an automated reasoner, and use said suitable components to connect said first network device (101) and a second network device (102).

**6.** A network device (101), adapted to receive an instruction comprising ontological information about available components, in particular protocols, algorithms or resources, suitable to connect said network device and another network device, to select suitable components from said available components using an automated reasoner, and to use said suitable components to connect said network device and said other network device.

**7.** A computer program for connecting a first network device (101) in a communications network (100), wherein said computer program, when executed on a computer, causes the computer to receive an instruction comprising ontological information about available components, in particular protocols, algorithms or resources, suitable to connect said first network device (101) and said second network device (102), select suitable components from said available components using an automated reasoner and use said suitable components to connect said first network device (101) and said second network device (102).

**8.** A computer program product for connecting a first network device (101) in a communications network (100) comprising a computer usable medium having a computer readable program, wherein said computer readable program, when executed on a computer, causes the computer to receive an instruction comprising information about available components, in particular protocols, algorithms or resources, suitable to connect said first network device (101) and said second network device (102), select suitable components from said available components using an automated reasoner and use said suitable components to connect said first network device (101) and said second network device (102).
